# EUROPÄISCHE PATENTANMELDUNG

(11) **EP 1 577 192 A2**
(43) Veröffentlichungstag der Anmeldung: **21.09.2005**
(21) Anmeldenummer: 05002860.4
(22) Anmeldetag: 11.02.2005
(51) Int. Cl.: B62D 3/12, F16C 19/32, F16C 19/44, F16C 33/58, F16C 23/08

(54) **Druckstück für Kraftfahrzeug-Zahnstangenlenkung**

(30) Priorität: 18.03.2004 DE 102004013167
(71) Anmelder: INA-Schaeffler KG, 91074 Herzogenaurach (DE)
(72) Erfinder: Osterlänger, Jürgen, 91448 Emskirchen (DE); Zernickel, Alexander, 91074 Herzogenaurach (DE); Willared, Stefan, 91352 Pautzfeld (DE)

(57) **Zusammenfassung**

Druckstück für eine Zahnstangenlenkung für ein Kraftfahrzeug, bei dem eine die Führungsrolle (15) aufnehmende Tragachse (16) an ihren beiden Enden im Druckstück (13) über je eine Nadelbüchse (17) gehalten ist, deren geschlossener Boden (17.1) unter Vorspannung an einer Stirnfläche der Tragachse (16) anliegt.

## Beschreibung

Die Erfindung betrifft eine Zahnstangenlenkung für ein Kraftfahrzeug, mit einem Lenkgehäuse, in dem eine Zahnstange längsverschieblich gelagert ist, sowie einem mit der Zahnstange kämmenden Ritzel und einem Druckstück, das auf einer einer Eingriffsseite mit dem Ritzel gegenüberliegenden Seite der Zahnstange angeordnet ist und mit Hilfe einer Feder gegen die Zahnstange vorgespannt ist, wobei das Druckstück in seinem Inneren eine der Kontur der Zahnstange angepaßte drehbare Führungsrolle mit einer Tragfläche aufweist, an der die Zahnstange mit einer korrespondierenden Tragfläche anliegt.

### Hintergrund der Erfindung

Derartige Zahnstangenlenkungen sind aus dem Stand der Technik seit längerem vorbekannt. Bei diesen Lenkungen wird die Zahnstange in Längsrichtung verschiebbar in einem Lenkgehäuse geführt. Ein in dem Lenkgehäuse drehbar gelagertes Ritzel greift in die Verzahnung der Zahnstange ein und bewirkt bei Drehung der mit dem Ritzel drehfest verbundenen Lenksäule die seitliche Verlagerung der Zahnstange, die wiederum über Spurstangen und Achsschenkel zu einer Verschwenkung der gelenkten Räder des Kraftfahrzeuges führt. Der Eingriff des Ritzels in die Zahnstange wird spielfrei gehalten, indem ein gegenüber dem Ritzel an der Zahnstange anliegendes Druckstück unter Vorspannung die Zahnstange gegen das Ritzel drückt. Das Druckstück muß dabei zum einen die erforderliche Anpreßkraft übertragen können und zum anderen eine Lagerfläche bieten, die bei der Verschiebung der Zahnstange auf dem Druckstück keine nennenswerten Reibkräfte und keinen wesentlichen Verschleiß hervorruft. Wird nun die über das Ritzel von der Hand des Fahrers aufgebrachte Lenkkraft durch einen Kugelgewindetrieb verstärkt, so wird durch die Momentübertragung die Zahnstange versucht sein, sich über ihre axiale Länge in Umfangsrichtung zu verdrehen. Dies versucht man dadurch zu verhindern, indem die Tragflächen von Führungsrolle und Zahnstange so zueinander angeordnet sind, dass sie sich einem Verdrehen der Zahnstange entgegen stellen.

Eine derartige Zahnstangenlenkung ist aus der DE 82 03 943 U vorbekannt. Wie Figur 5 dieser Vorveröffentlichung zeigt, weist die Zahnstange zwei Tragflächen auf, die symmetrisch gegen die Verzahnungsebene geneigt sind. Zur Zahnstangenlenkung gehört weiter eine Führungsrolle, die in einem Druckstück angeordnet ist und ebenfalls zwei Tragflächen aufweist. Die Tragflächen der Zahnstange werden durch spanenden Materialabtrag der im Ausgangszustand runden Zahnstange erzeugt. Die Tragflächen der Führungsrolle werden durch zwei im Druckstück angeordnete Außenringe eines Kugellagers gebildet, deren Mantelflächen, die die Tragflächen bilden, ebenfalls symmetrisch geneigt gegenüber der Verzahnungsebene angeordnet sind. Es liegt auf der Hand, dass durch eine solche Stellung der Tragflächen von Zahnstange und Führungsrolle ein Verdrehen der Zahnstange in Umfangsrichtung verhindert ist.
Nachteilig bei einer solchen Zahnstangenlenkung ist die aufwendige Ausgestaltung der Tragflächen von Zahnstange und Führungsrolle. Zum einen ist die spanende Bearbeitung der Zahnstange aufwendig und damit teuer, weil ein erheblicher Materialanteil abzutragen ist. Zum anderen ist das Druckstück sehr kompliziert aufgebaut und damit ebenfalls kostenaufwendig. So müssen zwei Kugellager über je einen Bolzen im Druckstück untergebracht werden, was große Anforderungen an die Montage stellt und darüber hinaus auch zusätzlichen Bauraum beansprucht. Es ist weiter von Nachteil, dass sich mit einem solch gattungsgemäß ausgebildeten Druckstück, dessen Führungsrolle sehr leichtgängig ist, eine definierte Reibung nicht einstellen lässt. Die ist aber von Bedeutung, da bei einem zu geringen Reibmoment die durch ein Flattern der Räder ausgelösten Längsschwingungen der Zahnstange bis in das Lenkrad fortgesetzt werden, was sich negativ auf den Lenkkomfort auswirkt.

### Zusammenfassung der Erfindung

Ausgehend von den Nachteilen des bekannten Standes der Technik ist es daher Aufgabe der Erfindung, eine wesentlich vereinfachte Zahnstangenlenkung mit Druckstück bereit zu stellen, die sich einfacher fertigen lässt und Drehmomente, Radial- und Axialkräfte bei einer hohen Tragfähigkeit sicher aufnehmen kann. Außerdem ist es Aufgabe der Erfindung, dass unerwünschte Schwingungen gedämpft werden.

Erfindungsgemäß wird diese Aufgabe nach dem kennzeichnenden Teil von Anspruch 1 in Verbindung mit dessen Oberbegriff dadurch gelöst, dass eine die Führungsrolle aufnehmende Tragachse an ihren beiden Enden im Druckstück über je eine Nadelbüchse gehalten ist, deren geschlossener Boden unter Vorspannung an einer Stirnfläche der Tragachse anliegt. Durch die Anlage des Bodens der Nadelbüchse an der Stirnfläche des Tragbolzen wird ein definiertes Reibmoment eingestellt, das ein Drehen der Führungsrolle erschwert. Die durch ein Flattern der Räder des Kraftfahrzeuges ausgelösten Längsschwingungen der Zahnstange werden somit durch die etwas schwergängigere Führungsrolle zumindest gedämpft, wenn nicht sogar getilgt.

Weitere vorteilhafte Ausgestaltungen der Erfindung sind in den Unteransprüchen beschrieben.

Aus Anspruch 2 geht hervor, dass der Boden der Nadelbüchse unterschiedlich gestaltet sein kann. So kann dieser beispielsweise kalottenförmig ausgebildet sein, mit einer nach innen weisenden Anlauffläche versehen sein oder auch eine waffelförmige Struktur aufweisen.

Gemäß Anspruch 3 ist es auch möglich, dass die Nadelbüchse aus einem dünnwandigen Blech hergestellt ist und der Boden federelastische Eigenschaften aufweist.

Nach einem weiteren Merkmal der Erfindung gemäß Anspruch 4 ist vorgesehen, dass zwischen dem Boden der Nadelbüchse und der Stirnfläche der Tragachse eine Anlaufscheibe angeordnet ist.

Nach einem weiteren Merkmal der Erfindung gemäß Anspruch 5 kann diese Anlaufscheibe aus einem Kunststoff oder aus Permaglide bestehen. Unter Permaglide ist ein Gleitmaterial zu verstehen, das aus einem Stahlrücken besteht, auf den eine Bronzeschicht aufgesintert ist, wobei in die Poren der Bronzeschicht als Gleitschicht eine Mischung aus Polytetrafluoräthylen (PTFE) und Blei eingewalzt ist. Nach einem weiteren zusätzlichen Merkmal gemäß Anspruch 6 kann diese Anlaufscheibe in Richtung der Tragachse eine waffelförmige Struktur aufweisen, was insbesondere für die Aufnahme von Schmiermittel günstig ist.

Nach einem anderen Merkmal der Erfindung gemäß Anspruch 7 ist vorgesehen, dass zwischen dem Boden der Nadelhülse und der Stirnfläche des Tragbolzens ein Axial- Nadellager angeordnet ist. Die zusätzliche Anordnung des Axiallagers hat gegenüber gleitender Reibung den Vorteil, dass neben einer Verschleißminimierung auch geringere Reibmomentschwankungen auftreten.
Es ist demnach eine Stick-Slip-freie Lagerung realisiert.

Nach einem zusätzlichen weiteren Merkmal der Erfindung gemäß Anspruch 8 ist vorgesehen, dass Rotationsachsen von in Taschen eines Käfigs angeordneten Lagernadeln einen unter einem Winkel abweichende Lage von einem durch einen Mittelpunkt der Lagernadeln gelegten Radius des Axial-Wälzlagers einnehmen. Vereinfacht ausgedrückt, die Taschen des Axial-Wälzlagers sind als Schrägtaschen ausgebildet. Dies hat den Vorteil, dass gegenüber einem normal ausgebildeten Axial- Nadellager das Reibmoment nochmals erhöht ist.

Nach einem anderen Merkmal gemäß Anspruch 9 ist vorgesehen, dass ein unterer Führungsteil des Druckstückes gegenüber einem oberen Teil des Druckstückes einen vergrößerten Durchmesser aufweist. Auf diese Weise ist sichergestellt, dass das Druckstück mit seinem unterem Teil exakt in einer Aufnahmebohrung geführt ist.

Aus Anspruch 10 geht hervor, dass im oberen Teil des Druckstückes mehrere in axialer Richtung verlaufende von einander beabstandete Freistellungen vorgesehen sind. Durch diese Freistellungen wird eine Federwirkung des Druckstückes in seinem oberen Teil realisiert, so dass die Nadelhülse mit Vorspannung an der Stirnseite der Tragachse anliegen kann.

Nach Anspruch 11 sollen die Tragflächen von Zahnstange und Führungsrolle so zueinander angeordnet sein, dass ein Verdrehen der Zahnstange in Umfangsrichtung verhindert ist. Dieses Verhindern des Verdrehens der Zahnstange in Umfangsrichtung ist besonders dann von Bedeutung, wenn die Lenkkraft durch eine Zusatzeinrichtung, beispielsweise durch einen Kugelgewindetrieb, verstärkt wird. In diesem Fall ist nämlich die Zahnstange versucht, sich in Umfangsrichtung zu verdrehen, was durch die erfindungsgemäße Ausbildung der Tragflächen zueinander aber verhindert ist.

Nach einem weitern Merkmal der Erfindung gemäß Anspruch 12 soll die Tragfläche als wenigstens einen innerhalb der der Zahnstange liegende Ausnehmung gebildet sein. Im Sinne der Erfindung soll dabei verstanden werden, dass im unteren Teil der Zahnstange, also im Bereich der Führungsrolle, deren Kreislinie oder Peripherie nur sehr geringfügig unterbrochen ist. Dies hat den Vorteil, dass die als Tragfläche dienende Ausnehmung durch einen einfachen spangebenden Prozeß, beispielsweise durch Fräsen, in die Zahnstange eingearbeitet werden kann. Das runde Querschnittsprofil der Zahnstange bleibt dabei im Wesentlichen erhalten. Es ist also gemäß den bisherigen Stand der Technik nicht mehr erforderlich, zur Herstellung der Tragfläche Unmengen von Material spanend abzutragen. Diese Ausnehmung kann nach Anspruch 13 entweder halbkreisförmig oder V-förmig ausgebildet sein.

Schließlich ist nach den Ansprüchen 14 und 15 vorgesehen, dass die Führungsrolle zweiteilig ausgebildet ist und dass Führungsrolle und Tragachse einstückig ausgebildet sind.

Die Erfindung wird an nachstehenden Ausführungsbeispielen näher erläutert.

### Kurze Beschreibung der Zeichnungen

### Es zeigen:

- Figur 1: eine Seitenansicht eines Druckstückes mit Zahnstange, teilweise geschnitten,
- Figur 2: eine perspektivische Darstellung eines Mantels eines Druckstückes,
- Figur 3: eine Seitenansicht des Mantels des Druckstückes gemäß Figur 2,
- Figur 4: eine Seitenansicht eines Druckstückes mit Zahnstange,
- Figur 5: eine Draufsicht auf ein Axialwälzlager und
- Figur 6: einen Längsschnitt durch ein Druckstück mit Zahnstange nach dem bisherigen Stand der Technik

### Ausführliche Beschreibung der Zeichnungen

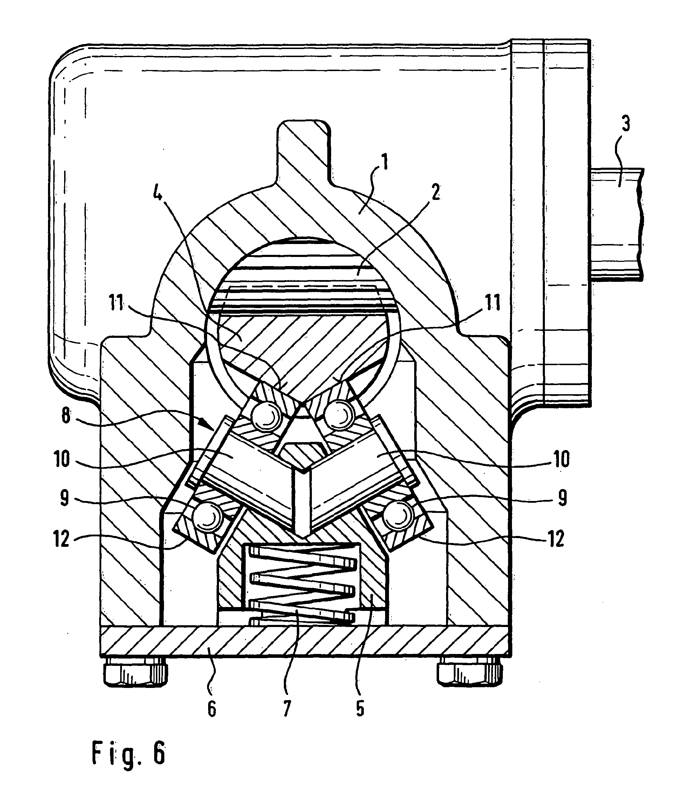

Zur Darstellung des Gesamtzusammenhanges sei zunächst auf den Stand der Technik gemäß Figur 6 verwiesen. Diese zeigt ein Gehäuse 1, in dem ein Ritzel 2, das in eine Lenkspindel 3 übergeht, gelagert ist. In die Verzahnung des Ritzels 2 greift die Verzahnung einer Zahnstange 4 ein, die quer zum Ritzel 2 verläuft. Auf der der Eingriffsseite des Ritzels 2 mit der Zahnstange 4 gegenüberliegenden Seite ist ein Druckstück 5 angeordnet, dass die vom Ritzel 2 auf die Zahnstange 4 übertragene Kraft im Wesentlichen abstützt. Das Druckstück 5 ist in einer nicht bezeichneten Aufnahmebohrung des Gehäuses 1 untergebracht. Es wird von einer zwischen dem Druckstück 5 und einem starr mit dem Gehäuse 1 verbundenen Deckel angeordneten Feder 7 in Richtung auf die Zahnstange 4 vorgespannt.

Im Druckstück 5 ist eine Führungsrolle 8 untergebracht, die aus zwei als Rillenkugellager ausgebildeten Wälzlagern 9 besteht, die auf je einer Tragachse 10 gehalten sind. Die Tragachsen 10 und damit die Wälzlager 9 sind unter einem bestimmten Winkel zur Verzahnungsebene angeordnet, so dass die schräg gestellten Lageraußenringe der Wälzlager 9 mit ihren Tragflächen 12 an den mit 11 bezeichneten Tragflächen der Zahnstange 4 anliegen, so dass sich diese in Umfangsrichtung nicht bewegen kann, falls ein Drehmoment, beispielsweise durch einen Kugelgewindetrieb, aufgebracht würde.

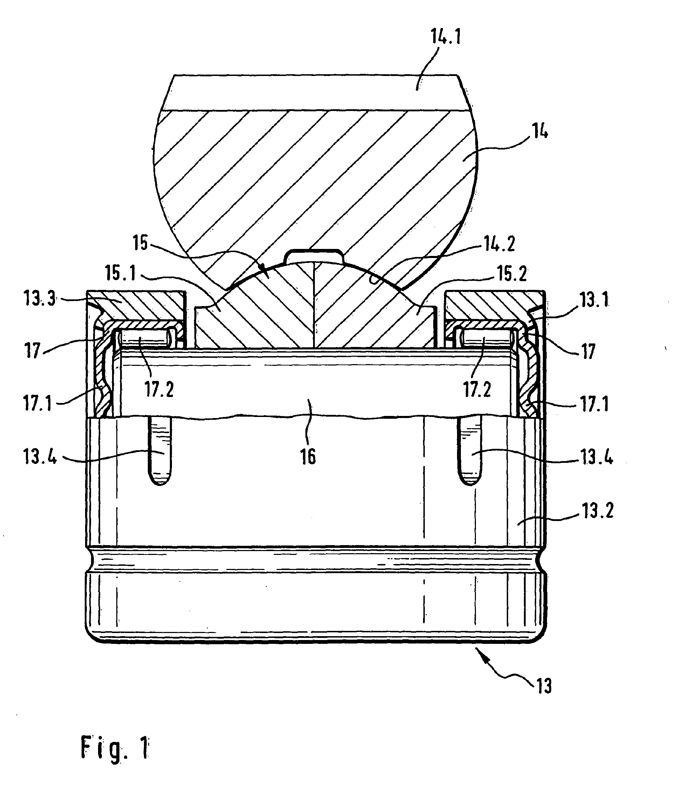

In Figur 1 ist eine Anordnung von einem erfindungsgemäßen Druckstück 13 und einer Zahnstange 14 gezeigt, wobei die Zahnstange 14 an ihrer vom Druckstück 13 abgewandten Seite die Verzahnung 14.1 aufweist, in die ein nicht dargestelltes Ritzel eingreift. An ihrer der Verzahnung 14.1 gegenüberliegenden Seite weist die Zahnstange 14 eine Ausnehmung 14.2 auf, die bogenförmig bzw. als gotisches Profil mit zwei Kontaktpunkten ausgebildet ist. In diese Ausnehmung 14.2 der Zahnstange 14 greift eine Führungsrolle 15 ein, die aus den beiden Teilen 15.1, 15.2 besteht und eine der Ausnehmung 14.2 angepaßte Kontur aufweist. Es ist erkennbar, dass auf diese Weise ein Verdrehen der Zahnstange 14 in Umfangsrichtung verhindert ist. Die Führungsrolle 15 ist von einer Tragachse 16 durchsetzt und mit dieser fest verbunden, beispielsweise durch Presssitz oder Formschluß. Die Tragachse 16 ist an ihren beiden gegenüberliegenden Enden von je einer Nadelbüchse 17 aufgenommen, deren Boden 17.1 in seinem Zentrum einen nicht näher bezeichneten Vorsprung aufweist, der an der Stirnfläche der Tragachse 16 unter Vorspannung anliegt. Zur Nadelbüchse 17 gehören die Lagernadeln 17.2, deren Laufbahnen einerseits von der Nadelbüchse 17 selbst und andererseits von einem Teil der Mantelfläche der Tragachse 16 gebildet sind. Die Nadelbüchse 17 ist im Druckstück 13 durch eine Verstemmung 13.1 gehalten. Wird nun über ein nicht dargestelltes Ritzel die Zahnstange 14 in ihrer Längsrichtung verschoben, so rollt sie mit ihrer Ausnehmung 14.2 auf der Führungsrolle 15 ab. Diese rotiert dabei in Umfangsrichtung auf der Tragachse 16, wobei Kräfte in radialer Richtung von den Lagernadeln 17.2 in rollender Reibung aufgenommen sind, während Kräfte in axialer Richtung gleitend durch den Boden 17.1 der Nadelbüchse 17 aufgenommen sind.

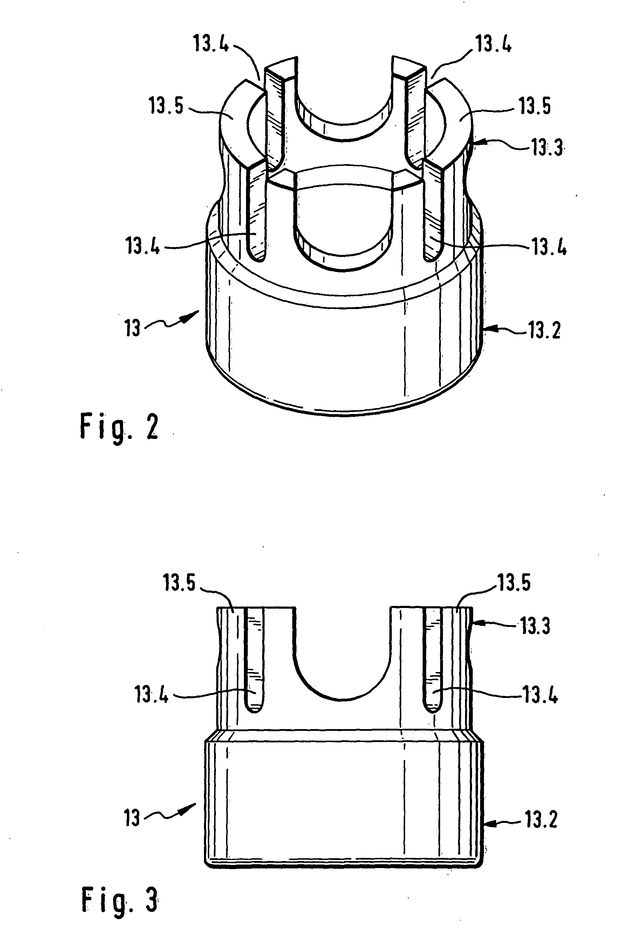

Wie aus den Figuren 2 und 3 erkennbar, weist das Druckstück 13 einen abgestuften Verlauf derart auf, dass ein zur Führung dienendes unteres Teil 13.2 einen größeren Durchmesser gegenüber einem oberen Teil 13.3 hat. Der obere Teil 13.3 des Druckstückes 13 ist mit mehreren in Umfangsrichtung voneinander beabstandeten Freistellungen 13.4 versehen, die in axialer Richtung verlaufen, so dass zwei gegenüberliegende Teilbereiche 13.5 gebildet sind, die federnde Eigenschaften aufweisen. Diese Teilbereiche 13.5 sorgen dafür, dass die beiden Nadelbüchsen 17 auf einander zubewegt werden und so die Vorspannung mit Hilfe des Nadelbüchsenbodens 17.1 realisiert ist.

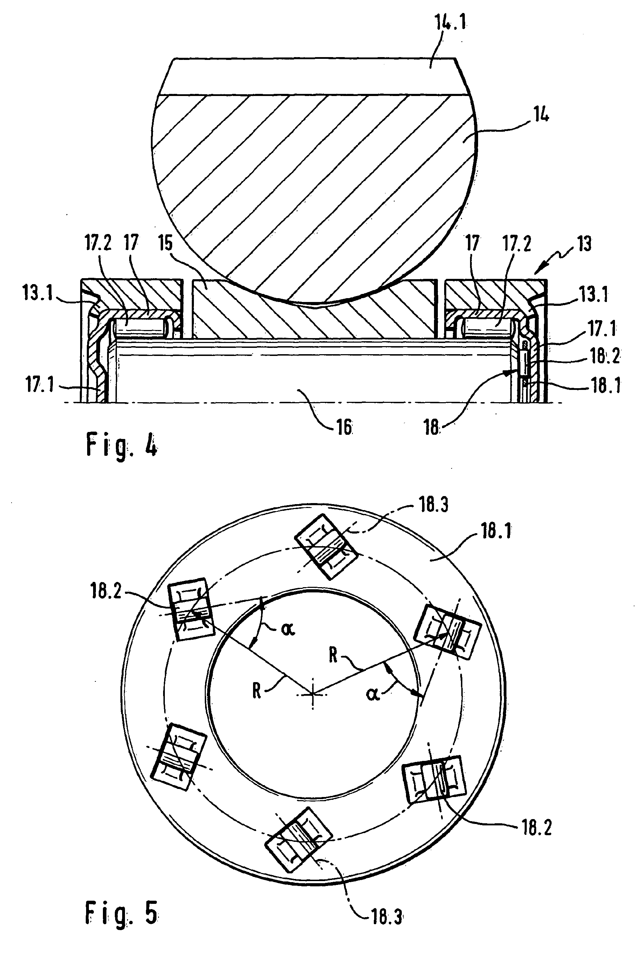

Der Unterschied der im rechten Teil von Figur 4 gezeigten Anordnung zu Figur 1 besteht darin, dass die Zahnstange 14 nicht gegen ein Verdrehen in Umfangsrichtung abgesichert ist. Die Tragflächen der Zahnstange 14 und der Führungsrolle 15 sind so gewählt, dass die Zahnstange 14 sich innerhalb der Führungsrolle 15 verdrehen kann. Ein weiterer Unterschied liegt darin, dass zwischen dem Boden 17.1 der Nadelbüchse 17 und der Stirnfläche der Tragachse 16 ein Axial-Nadellager 18 angeordnet ist. Dieses besteht aus Lagernadeln 18.2, die in einem Käfig 18.1 geführt sind, so dass zwischen Stirnfläche der Tragachse 16 und dem vorgespannten Büchsenboden 17.1 eine rollende Reibung realisiert ist. Wie aus Figur 5 erkennbar, können die Taschen des Axial-Nadellagers 18 als Schrägtaschen ausgebildet sein, wobei die Rotationsachsen 18.3 von in Taschen des Käfigs 18.1 angeordneten Lagernadeln 18.2 einen unter einem Winkel α abweichende Lage von dem durch einem Mittelpunkt der Lagernadeln 18.2 gelegten Radius R des Axial-Wälzlagers 18 einnehmen.

In den genannten Figuren ist eine aus Druckstück 13 und Zahnstange 14 bestehende Einheit dargestellt, die sich durch folgende Vorteile auszeichnet:
- kostengünstige Herstellung und Montage,
- hohe Laufruhe,
- sichere Aufnahme von axialen- und radialen Kräften und von einwirkenden Drehmomenten,
- hohe Tragfähigkeit,
- einstellbare Vorspannung zur Schwingungsdämpfung.

### Bezugszahlenliste

- 1: Gehäuse
- 2: Ritzel
- 3: Lenkspindel
- 4: Zahnstange
- 5: Druckstück
- 6: Deckel
- 7: Feder
- 8: Führungsrolle
- 9: Wälzlager
- 10: Tragachse
- 11: Tragfläche
- 12: Tragfläche
- 13: Druckstück
- 13.1: Verstemmung
- 13.2: unteres Führungsteil
- 13.3: oberes Teil
- 13.4: Freistellung
- 13.5: Teilbereich
- 14: Zahnstange
- 14.1: Verzahnung
- 14.2: Ausnehmung
- 15: Führungsrolle
- 15.1: Teil
- 15.2: Teil
- 16: Tragachse

- 17: Nadelbüchse
- 17.1: Boden
- 17.2: Lagernadel
- 18: Axial-Nadellager
- 18.1: Käfig
- 18.2: Lagernadel
- 18.3: Rotationsachse
- R: Radius
- α: Winkel

## Patentansprüche

1. Zahnstangenlenkung für ein Kraftfahrzeug, mit einem Lenkgehäuse, in dem eine Zahnstange (14) längsverschieblich gelagert ist, sowie einem mit der Zahnstange (14) kämmenden Ritzel und einem Druckstück (13), das auf einer einer Eingriffsseite mit dem Ritzel gegenüberliegenden Seite der Zahnstange (14) angeordnet ist und mit Hilfe einer Feder gegen die Zahnstange (14) vorgespannt ist, wobei das Druckstück (13) in seinem Inneren eine der Kontur der Zahnstange (14) angepaßte drehbare Führungsrolle (15) mit einer Tragfläche aufweist, an der die Zahnstange (14) mit einer korrespondierenden Tragfläche anliegt, **dadurch gekennzeichnet, dass** eine die Führungsrolle (15) aufnehmende Tragachse (16) an ihren beiden Enden im Druckstück (13) über je eine Nadelbüchse (17) gehalten ist, deren geschlossener Boden (17.1) unter Vorspannung an einer Stirnfläche der Tragachse (16) anliegt.

2. Zahnstangenlenkung nach Anspruch 1, **dadurch gekennzeichnet, dass** der Boden (17.1) der Nadelbüchse (17) kalottenförmig ausgebildet ist, mit einer nach innen weisenden Anlauffläche versehen ist oder eine waffelförmige Struktur aufweist.

3. Zahnstangenlenkung nach Anspruch 1, **dadurch gekennzeichnet, dass** die Nadelbüchse (17) aus einem dünnwandigen Blech hergestellt ist und der Boden (17.1) federelastische Eigenschaften aufweist.

4. Zahnstangenlenung nach Anspruch 1, **dadurch gekennzeichnet, dass** zwischen dem Boden (17.1) der Nadelbüchse (17) und der Stirnfläche der Tragachse (16) eine Anlaufscheibe angeordnet ist.

5. Zahnstangenlenkung nach Anspruch 4, **dadurch gekennzeichnet, dass** die Anlaufscheibe aus einem Kunststoff oder aus Permaglide besteht.

6. Zahnstangenlenkung nach Anspruch 4, **dadurch gekennzeichnet, dass** die Anlaufscheibe in Richtung Tragachse (16) eine waffelförmige Struktur aufweist.

7. Zahnstangenlenkung nach Anspruch 1, **dadurch gekennzeichnet, dass** zwischen dem Boden (17.1) der Nadelbüchse (17) und der Stirnfläche der Tragachse (16) ein Axial-Nadellager (18) angeordnet ist.

8. Zahnstangenlenkung nach Anspruch 7, **dadurch gekennzeichnet, dass** Rotationsachsen (18.3) von in Taschen eines Käfigs (18.1) angeordneten Lagernadeln (18.2) eine unter einem Winkel α abweichende Lage von einem durch einen Mittelpunkt der Lagernadein (18.2) gelegten Radius R des Axial-Nadellagers (18) einnehmen.

9. Zahnstangenlenkung nach Anspruch 1, **dadurch gekennzeichnet, dass** ein unterer Führungsteil (13.2) gegenüber einem oberen Teil (13.3) des Druckstückes (13) einen vergrößerten Durchmesser aufweist.

10. Zahnstangenlenkung nach Anspruch 9, **dadurch gekennzeichnet, dass** im oberen Teil (13.3) des Druckstückes (13) mehrere in axialer Richtung verlaufende voneinander beabstandete Freistellungen (13.4) vorgesehen sind.

11. Zahnstangenlenkung nach Anspruch 1, **dadurch gekennzeichnet, dass** die Tragflächen von Zahnstange (14) und Führungsrolle (15) so zueinander angeordnet sind, dass ein Verdrehen der Zahnstange (14) in Umfangsrichtung verhindert ist.

12. Zahnstangenlenkung nach Anspruch 11, **dadurch gekennzeichnet, dass** die Tragfläche als wenigstens eine innerhalb der Zahnstange (14) liegende Ausnehmung (14.2) gebildet ist.

13. Zahnstangenlenkung nach Anspruch 12, **dadurch gekennzeichnet, dass** die Ausnehmung (14.2) halbkreisförmig oder V-förmig ausgebildet ist.

14. Zahnstangenlenkung nach Anspruch 1, **dadurch gekennzeichnet, dass** die Führungsrolle (15) zweiteilig ausgebildet ist.

15. Zahnstangenlenkung nach Anspruch 1, **dadurch gekennzeichnet, dass** Führungsrolle (15) und Tragachse (16) einstückig ausgebildet sind.
